# NEUE EUROPÄISCHE PATENTSCHRIFT

(11) **EP 2 073 943 B2**
(45) Veröffentlichungstag und Bekanntmachung des Hinweises auf die Entscheidung über den Einspruch: **02.09.2020**
(45) Hinweis auf die Patenterteilung: 14.11.2012
(21) Anmeldenummer: 07820480.7
(22) Anmeldetag: 24.09.2007
(51) Int. Cl.: B07B 1/46

(54) **VERFAHREN ZUM KLASSIEREN WASSERABSORBIERENDER POLYMERPARTIKEL**
METHOD FOR GRADING WATER-ABSORBENT POLYMER PARTICLES
PROCÉDÉ DESTINÉ À CLASSER DES PARTICULES POLYMÈRES ABSORBANT L'EAU

(30) Priorität: 25.09.2006 EP 06121230
(43) Veröffentlichungstag der Anmeldung: 01.07.2009
(73) Patentinhaber: BASF SE, 67056 Ludwigshafen am Rhein (DE)
(72) Erfinder: STUEVEN, Uwe, 65812 Bad Soden (DE); FUNK, Rüdiger, 65527 Niedernhausen (DE); WEISMANTEL, Matthias, 63637 Jossgrund (DE); POSSEMIERS, Karl J., B-2970 Schilde (BE); MEES, Filip, B-2280 Grobbendonk (BE)
(74) Vertreter: BASF IP Association
(86) Internationale Anmeldenummer: PCT/EP2007/060073
(87) Internationale Veröffentlichungsnummer: WO 2008/037673

(56) Entgegenhaltungen:
- EP-A- 0 855 232
- WO-A-2005/080479
- WO-A-2006/074816
- WO-A1-91/15368
- WO-A1-98/49221
- WO-A1-03/031482
- WO-A1-2006/033477
- US-A1- 2003 008 946
- Practical Knowledge of Chemical Plants/Equipment, Ohmsha Ltd, 1997, Seiten 134-137
- Powder Technology Handbook, Nikkan Kogyo Shinbun Ltd., 1986, Seiten 22 und 529-537

## Beschreibung

Die vorliegende Erfindung betrifft ein Verfahren zum Klassieren wasserabsorbierender Polymerpartikel, wobei zur Abtrennung des Überkorns vor und nach der Nachvernetzung Siebe mit unterschiedlichen Maschenweiten verwendet werden.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Eigenschaften der wasserabsorbierenden Polymere können über den Vernetzungsgrad eingestellt werden. Mit steigendem Vernetzungsgrad steigt die Gelfestigkeit und sinkt die Zentrifugenretentionskapazität (CRC).

Zur Verbesserung der Anwendungseigenschaften, wie beispielsweise Flüssigkeitsweiterleitung im gequollenen Gelbett (SFC) in der Windel und Absorption unter Druck (AUL), werden wasserabsorbierende Polymerpartikel im allgemeinen nachvernetzt. Dadurch steigt nur der Vernetzungsgrad der Partikeloberfläche, wodurch die Absorption unter Druck (AUL) und die Zentrifugenretentionskapazität (CRC) zumindest teilweise entkoppelt werden können. Diese Nachvernetzung kann in wässriger Gelphase durchgeführt werden. Vorzugsweise werden aber getrocknete, gemahlene und abgesiebte Polymerpartikel (Grundpolymer) an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Die wasserabsorbierenden Polymere gelangen als pulverförmiges, körniges Produkt bevorzugt im Hygienesektor zum Einsatz. Hier werden beispielsweise Teilchengrößen zwischen 200 und 850 µm eingesetzt und das partikuläre Polymermaterial wird bereits beim Herstellungsprozess auf diese Korngrößen klassiert. Hierbei werden kontinuierlich arbeitende Siebmaschinen mit zwei Sieben eingesetzt, wobei Siebe mit den Maschenweiten von 200 und 850 µm verwendet werden. Partikel mit einer Korngröße von bis zu 200 µm fallen dabei durch beide Siebe und werden am Boden der Siebmaschine als Unterkorn gesammelt. Partikel mit einer Korngröße von größer 850 µm verbleiben als Überkorn auf dem obersten Sieb und werden ausgeschleust. Die Produktfraktion mit einer Korngröße von größer 200 bis 850 µm wird als Mittelkorn zwischen den beiden Sieben der Siebmaschine entnommen. Abhängig von der Siebgüte enthält dabei jede Korngrößenfraktion noch einen Anteil an Partikeln mit der falschen Korngröße als sogenannten Fehlaustrag. So kann beispielsweise die Überkornfraktion noch einen Anteil an Partikeln mit einer Korngröße von 850 µm oder weniger enthalten.

Ausgeschleustes Unter- und Überkorn wird üblicherweise in die Herstellung zurückgeführt. Das Unterkorn kann beispielsweise der Polymerisation zugesetzt werden. Das Überkorn wird üblicherweise zerkleinert, was zwangsläufig auch zu einem Zwangsanfall von weiterem Unterkorn führt.

Bei den herkömmlichen Klassiervorgängen treten unterschiedliche Probleme auf, wenn teilchenförmige Polymere klassiert werden. Häufigstes Problem ist die Verstopfung der Sieboberfläche sowie die Verschlechterung der Klassifizierungseffizienz und der Klassierfähigkeit. Ein weiteres Problem ist die Verbackungsneigung des Produkts, die vor, nach und während der Siebung zu unerwünschte Agglomeraten führt. Der Verfahrensschritt der Siebung kann daher nicht frei von Störungen, oft begleitet von ungewollten Stillständen bei der Polymerherstellung, durchgeführt werden. Besonders problematisch erweisen sich derartige Störungen im kontinuierlichen Herstellungsverfahren. Insgesamt resultiert daraus jedoch eine unzureichende Trennschärfe bei der Siebung. Diese Problematik ist vor allem bei der Klassierung von nachvernetztem Produkt zu beobachten.

Eine höhere Siebgüte wird üblicherweise dadurch erzielt, indem man dem Produkt Substanzen zusetzt, die dazu dienen, die Rieselfähigkeit und/oder die mechanische Stabilität des Polymerpulvers zu erhöhen. In aller Regel wird ein rieselfähiges Produkt erreicht, wenn man dem Polymerpulver, meist nach der Trocknung und/oder im Rahmen der Nachvernetzung Hilfsstoffe, beispielsweise Tenside, zusetzt, die ein gegenseitiges Verkleben der einzelnen Partikel verhindern. In anderen Fällen versucht man durch verfahrenstechnische Maßnahmen Einfluss auf die Verbackungstendenzen zu nehmen.

Um ohne weitere Produktzusätze höhere Trennschärfen zu erreichen, wurden Verbesserungen durch alternative Siebanlagen vorgeschlagen. So werden höhere Trennschärfen erreicht, wenn Sieböffnungsflächen spiralförmig angetrieben werden. Dies ist beispielsweise der Fall bei Taumelsiebmaschinen. Wird jedoch der Durchsatz derartiger Siebvorrichtungen erhöht, so werden obige Probleme verstärkt, und es wird immer weniger möglich, das hohe Klassiervermögen aufrechtzuerhalten.

Auch der Zusatz von Siebhilfen, wie Siebbälle, PVC-Reibringe, Teflon-Reibringe oder Gummiwürfel, auf die Sieboberfläche, hilft nur unwesentlich die Trennschärfe zu steigern. Besonders bei amorphem Polymermaterial, wie wasserabsorbierenden Polymerpartikeln, kann es dadurch zu verstärktem Abrieb kommen.
Ein allgemeine Übersicht zur Klassierung ist beispielsweise in Ullmanns Encyklopädie der technischen Chemie, 4. Auflage, Band 2, Seiten 43 bis 56, Verlag Chemie, Weinheim, 1972, zu finden.

EP 855 232 A2 beschreibt ein Klassierverfahren für wasserabsorbierende Polymere. Durch Verwendung beheizter oder thermisch isolierter Siebe werden insbesondere bei kleinen Korngrößen Agglomerate unterhalb des Siebes vermieden.

DE 10 2005 001 789 A1 beschreibt ein Klassierverfahren, das bei vermindertem Druck durchgeführt wird.

JP 2003/320308 A beschreibt ein Verfahren, bei dem Agglomerate vermieden werden, indem die Siebunterseite mit warmer Luft angeströmt wird.

WO 92/18171 A1 beschreibt den Zusatz anorganischer Pulver als Siebhilfsmittel.

WO 03/031482 A1 beschreibt ein Verfahren zur Oberflächennachvernetzung, wobei die wasserabsorbierenden Polymere vorher und nachher gesiebt werden.

WO 91/15368 A1 beschreibt ein Verfahren zur Herstellung vernetzter Aggregate

Aufgabe der vorliegenden Erfindung war die Bereitstellung eines verbesserten Klassierverfahrens zur Herstellung wasserabsorbierender Polymerpartikel.

Gelöst wurde die Aufgabe durch ein Verfahren zur Herstellung wasserabsorbierender Polymerpartikel, umfassend
i) Klassieren der wasserabsorbierenden Polymerpartikel, wobei das Überkorn mittels mindestens eines Siebes abgetrennt wird und das Sieb oder bei mehreren Sieben das Sieb mit der niedrigsten Maschenweite die Maschenweite m₁ aufweist,
ii) Nachvernetzen der klassierten Polymerpartikel und
iii) Klassieren der nachvernetzten Polymerpartikel, wobei das Überkorn mittels mindestens eines Siebes abgetrennt wird und das Sieb oder bei mehreren Sieben das Sieb mit der niedrigsten Maschenweite die Maschenweite m₂ aufweist,
dadurch gekennzeichnet, dass m₂ größer als m₁ ist, der stündliche Durchsatz an wasserabsorbierenden Polymerpartikeln beim Klassieren mindestens 100 kg pro m² Siebfläche beträgt, die Maschenweite m₁ mindestens 850 µm beträgt und die Maschenweite m₂ mindestens 150 µm größer ist als die Maschenweite m₁.

Mit Überkorn wird hierbei ein Siebschnitt bezeichnet, der eine im Vergleich zum Zielprodukt größere mittlere Partikelgröße aufweist. Das Überkorn kann auch aus mehreren Siebschnitten bestehen, die diese Bedigung erfüllen.

Der Erfindung liegt die Erkenntnis zugrunde, dass durch die Nachvernetzung nur sehr wenige Agglomerate mit geringfügig erhöhter Korngröße entstehen. Wurden beispielsweise Partikel mit einer Korngröße von größer 850 µm vor der Nachvernetzung abgetrennt, so enthält das nachvernetzte Produkt nur sehr wenige Partikel mit einer Korngröße in Bereich größer 850 bis 1000 µm. Ein Partikel mit einer Korngröße von 850 µm ist hierbei ein Partikel, dass eine Sieb mit einer Maschenweite von 850 µm gerade noch passieren kann.

Dies ermöglicht die Verwendung von Sieben mit vergrößerter Maschenweite bei der Abtrennung des Überkorns nach der Nachvernetzung. Einerseits kann durch diese Maßnahme die Spezifikation an Partikeln mit großen Korngrößen in der Mittelkornfraktion, beispielsweise höchstens 1 Gew.-% mit einer Korngröße von über 850 µm, eingehalten werden, andererseits wird der Fehlaustrag in der Überkornfraktion und damit der Zwangsanfall an Unterkorn bei der Rückführung erheblich reduziert.

Das Siebergebnis kann, insbesondere bei hohen Durchsätzen, weiter verbessert werden, wenn dass Überkorn mittels mindestens zweier Siebe unterschiedlicher Maschenweiten abgetrennt wird.

Die Maschenweite m₂ beträgt üblicherweise mindestens 800 µm, vorzugsweise mindestens 850 µm, bevorzugt mindestens 900 µm, besonders bevorzugt mindestens 950 µm, ganz besonders bevorzugt mindestens 1.000 µm.

Die wasserabsorbierenden Polymerpartikel weisen während des Klassierens vorzugsweise eine Temperatur von 40 bis 120 °C, besonders bevorzugt von 45 bis 100 °C, ganz besonders bevorzugt von 50 bis 80 °C, auf.

In einer bevorzugten Ausführungsform der vorliegenden Erfindung wird bei vermindertem Druck klassiert. Der Druck beträgt dabei vorzugsweise 100 mbar weniger als der Umgebungsdruck.

Besonders vorteilhaft wird das erfindungsgemäße Klassierverfahren kontinuierlich durchgeführt. Der Durchsatz an wasserabsorbierendem Polymer beträgt dabei üblicherweise mindestens 100 kg/m²·h, vorzugsweise mindestens 150 kg/m²·h, bevorzugt mindestens 200 kg/m²·h, besonders bevorzugt mindestens 250 kg/m²·h, ganz besonders bevorzugt mindestens 300 kg/m²·h.

Vorzugsweise wird das wasserabsorbierende Harz während des Klassierens mit einem Gasstrom, besonders bevorzugt Luft, überströmt. Die Gasmenge beträgt typischerweise von 0,1 bis 10 m³/h pro m² Siebfläche, vorzugsweise von 0,5 bis 5 m³/h pro m² Siebfläche, besonders bevorzugt von 1 bis 3 m³/h pro m² Siebfläche, wobei das Gasvolumen unter Standardbedingungen gemessen wird (25 °C und 1 bar). Besonders bevorzugt wird der Gasstrom vor dem Eintritt in die Siebvorrichtung angewärmt, typischerweise auf eine Temperatur von 40 bis 120 °C, vorzugsweise auf eine Temperatur von 50 bis 110 °C, bevorzugt auf eine Temperatur von 60 bis 100 °C, besonders bevorzugt auf eine Temperatur von 65 bis 90 °C, ganz besonders bevorzugt auf eine Temperatur von 70 bis 80 °C. Der Wassergehalt des Gasstroms beträgt typischerweise weniger 5 g/kg, vorzugsweise weniger als 4,5 g/kg, bevorzugt weniger als 4 g/kg, besonders bevorzugt weniger als 3,5 g/kg, ganz besonders bevorzugt weniger als 3 g/kg. Ein Gasstrom mit geringem Wassergehalt kann beispielsweise erzeugt werden, indem aus einem Gasstrom mit höherem Wassergehalt eine entsprechende Wassermenge durch Abkühlung auskondensiert wird.

In einer bevorzugten Ausführungsform der vorliegenden Erfindung werden mehrere Siebmaschinen parallel betrieben.

Die Siebmaschinen werden üblicherweise elektrisch geerdet.

Durch Einsatz des erfindungsgemäßen Klassierverfahrens beträgt der Anteil an Partikeln mit einer Korngröße von kleiner oder gleich m₁ üblicherweise weniger als 50 Gew.-%, vorzugsweise weniger als 45 Gew.-%, bevorzugt weniger als 40 Gew.-%, besonders bevorzugt weniger als 35 Gew.-%, ganz besonders bevorzugt weniger als 30 Gew.-%.

Die für das erfindungsgemäße Klassierverfahren geeigneten Siebvorrichtungen unterliegen keiner Beschränkung, bevorzugt sind Plansiebverfahren, ganz besonders bevorzugt sind Taumelsiebmaschinen. Die Siebvorrichtung wird zur Unterstützung der Klassierung typischerweise gerüttelt. Dies geschieht vorzugsweise so, dass das zu klassierende Gut spiralförmig über das Sieb geführt wird. Diese erzwungene Vibration hat typischerweise eine Amplitude von 0,7 bis 40 mm, vorzugsweise von 1,5 bis 25 mm, und eine Frequenz von 1 bis 100 Hz, vorzugsweise von 5 bis 10 Hz.

Die im erfindungsgemäßen Verfahren einzusetzenden wasserabsorbierenden Polymerpartikel können durch Polymerisation von Monomerlösungen, enthaltend mindestens ein ethylenisch ungesättigtes Monomer a), wahlweise mindestens einen Vernetzer b), mindestens einen Initiator c) und Wasser d), hergestellt werden.

Die Monomeren a) sind vorzugsweise wasserlöslich, d.h. die Löslichkeit in Wasser bei 23 °C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 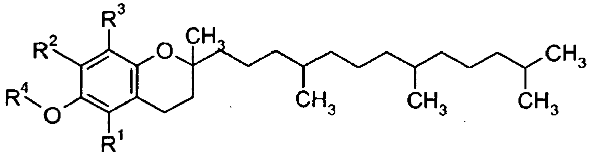 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Menge an Vernetzer b) beträgt vorzugsweise 0,01 bis 5 Gew.-%, besonders bevorzugt 0,05 bis 2 Gew.-%, ganz besonders bevorzugt 0,1 bis 1 Gew.-%, jeweils bezogen auf die Monomerlösung.

Als Initiatoren c) können sämtliche unter den Polymerisationsbedingungen radikalbildende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 1 Gew.-%, bezogen auf die Monomeren a). Die bevorzugten Polymerisationsinhibitoren benötigen für eine optimale Wirkung gelösten Sauerstoff. Daher kann die Monomerlösung vor der Polymerisation durch Inertisierung, d. h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Polymers sowie weitere geeignete hydrophile ethylenisch ungesättigte Monomere a) werden in DE 199 41 423 A1, EP 686 650 A1, WO 2001/45758 A1 und WO 2003/104300 A1 beschrieben.

Geeignete Reaktoren sind Knetreaktoren oder Bandreaktoren. Im Kneter wird das bei der Polymerisation einer wässrigen Monomerlösung entstehende Polymergel durch beispielsweise gegenläufige Rührwellen kontinuierlich zerkleinert, wie in WO 2001/38402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Fleischwolf, Extruder oder Kneter.

Vorteilhaft wird das Hydrogel nach dem Verlassen des Polymerisationsreaktors noch bei höherer Temperatur, vorzugsweise mindestens 50 °C, besonders bevorzugt mindestes 70 °C, ganz besonders bevorzugt mindestens 80 °C, sowie vorzugsweise weniger als 100 °C, gelagert, beispielsweise in isolierten Behältern. Durch die Lagerung, üblicherweise 2 bis 12 Stunden, wird der Monomerumsatz weiter erhöht.

Bei höheren Monomerumsätzen im Polymerisationsreaktor kann die Lagerung auch deutlich verkürzt bzw. auf eine Lagerung verzichtet werden.

Die Säuregruppen der erhaltenen Hydrogele sind üblicherweise teilweise neutralisiert, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23 °C vorliegen. In diesem Fall ist eine Dosierung als Stückgut oder Schmelze bei erhöhter Temperatur möglich.

Es ist aber auch möglich die Neutralisation nach der Polymerisation auf der Stufe des Hydrogels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Wird das Hydrogel zumindest teilweise nach der Polymerisation neutralisiert, so wird das Hydrogel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Hydrogel wird dann vorzugsweise mit einem Bandtrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß um so einfacher und das Produkt um so weißer, wenn der Feststoffgehalt des Gels möglichst hoch ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern.

Das getrocknete Hydrogel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. 420.2-02 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Die wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 60 g/g, wobei die Zentrifugenretentionskapazität (CRC) gemäß der von der EDANA (European Disposables and Nonwovens Association) empfohlenen Testmethode Nr. 441.2-02 "Centrifuge retention capacity" bestimmt wird.

Die Polymerpartikel werden zur weiteren Verbesserung der Eigenschaften nachvernetzt. Geeignete Nachvernetzer sind Verbindungen, die Gruppen enthalten, die mit den mindestens zwei Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

In einer bevorzugten Ausführungsform der vorliegenden Erfindung werden zusätzlich zu den Nachvernetzern polyvalente Kationen auf die Partikeloberfläche aufgebracht. Die im erfindungsgemäßen Verfahren einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 0,5 Gew.-%, vorzugsweise 0,005 bis 0,2 Gew.-%, besonders bevorzugt 0,02 bis 0,1 Gew.-%. jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250 °C, bevorzugt 120 bis 220 °C, und besonders bevorzugt 130 bis 210 °C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Anschließend wird das nachvernetzte Polymer erneut klassiert.

Der mittlere Durchmesser der als Produktfraktion abgetrennten Polymerpartikel beträgt vorzugsweise mindestens 200 µm, besonders bevorzugt von 250 bis 600 µm, ganz besonders von 300 bis 500 µm. 90% der Polymerpartikel weisen einen Durchmesser von vorzugsweise 100 bis 800 µm, besonders bevorzugt von 150 bis 700 µm, ganz besonders bevorzugt von 200 bis 600 µm, auf.

### Beispiele

### Vergleichsbeispiel:

Durch kontinuierliches Mischen von Wasser, 50 gew.-%iger Natronlauge und Acrylsäure wurde eine 38,8 gew.-%ige Acrylsäure/Natriumacrylatlösung hergestellt, so dass der Neutralisationsgrad 71,3 mol-% betrug. Die Monomerlösung wurde nach dem Mischen der Komponenten durch einen Wärmetauscher kontinuierlich abgekühlt.

Als mehrfach ethylenisch ungesättigter Vernetzer wird Polyethylenglykol-400-diacrylat (Diacrylat eines Polyethylenglykols mit einem mittleren Molgewicht von 400 g/mol) verwendet. Die Einsatzmenge betrug 2 kg pro t Monomerlösung.

Zur Initiierung der radikalischen Polymerisation wurden folgende Komponenten eingesetzt: Wasserstoffperoxid (1,03 kg (0,25 gew.-%ig) pro t Monomerlösung), Natriumperoxodisulfat (3,10 kg (15 gew.-%ig) pro t Monomerlösung), sowie Ascorbinsäure (1,05 kg (1 gew.-%ig) pro t Monomerlösung).

Der Durchsatz der Monomerlösung betrug 20 t/h.

Die einzelnen Komponenten werden kontinuierlich in einen List Contikneter mit 6.3m³ Volumen (Fa. List, Arisdorf, Schweiz) in folgenden Mengen eindosiert:

| | |
|---|---|
| 20 t/h | Monomerlösung |
| 40 kg/h | Polyethylenglycol-400-diacrylat |
| 82,6 kg/h | Wasserstoffperoxidlösung/Natriumperoxodisulfat-Lösung |
| 21 kg/h | Ascorbinsäurelösung |

Zwischen den Zugabepunkten für Vernetzer und Initiatoren wurde die Monomerlösung mit Stickstoff inertisiert. Am Ende des Reaktors wurden zusätzlich 1.000 kg/h abgetrenntes Unterkorn mit einer Partikelgröße kleiner 150 µm zudosiert.

Die Reaktionslösung hatte am Zulauf eine Temperatur von 23,5 °C. Der Reaktor wurde mit einer Drehzahl der Wellen von 38rpm betrieben. Die Verweilzeit der Reaktionsmischung im Reaktor betrug 15 Minuten.

Nach Polymerisation und Gelzerkleinerung wurde das wässrige Polymergel auf einen Bandtrockner aufgegeben. Die Verweilzeit auf dem Trocknerband betrug ca. 37 Minuten.

Das getrocknete Hydrogel wurde gemahlen und gesiebt. Die Fraktion mit der Partikelgröße 150 bis 850 µm wurde nachvernetzt.

Die Nachvernetzerlösung wurde in einem Schugi-Mischer (Fa, Hosokawa-Micron B.V., Doetichem, NL) auf die Polymerpartikel aufgesprüht. Die Nachvernetzerlösung war eine 2,7 gew.-%ige Lösung von Ethylenglykoldiglycidylether in Propylenglykol/Wasser Gewichtsverhältnis 1:3).

Es wurden die folgenden Mengen dosiert:

| | |
|---|---|
| 7,5 t/h | wasserabsorbierende Polymerpartikel (Grundpolymer) |
| 308,25 kg/h | Nachvernetzerlösung |

Anschließend wurde 60 Minuten bei 150 °C in einem NARA-Paddle-Dryer (Fa. GMF Gouda, Waddinxveen, NL) getrocknet und nachvernetzt.

Die nachvernetzten Polymerpartikel wurden in einem NARA-Paddle-Dryer (Fa. GMF Gouda, Waddinxveen, NL) auf 60 °C abgekühlt.

Die abgekühlten Polymerpartikel wurden in einer Taumelsiebmaschine (Allgaier Werke GmbH, Uhingen, DE) mit drei Siebdecks kontinuierlich gesiebt. Die Siebe hatten einen Durchmesser von jeweils 260 cm und wiesen, von unten nach oben, eine Maschenweite von 150 µm, 500 µm, 850 µm und 1.000 µm auf. Die Siebfraktionen von den Sieben mit den Maschenweiten von 150 µm und 500 µm wurden zur Mittelkornfraktion vereinigt. Die Siebfraktionen von den Sieben mit den Maschenweiten von 850 µm und 1.000 µm wurden vereinigt und als Überkorn rückgeführt. Insgesamt fielen 0,9 bis 1,4 t/h Überkorn an.

Die Partikelgrößenverteilung der vereinigten Mittelkornfraktion wurde gemäß der von der EDANA (European Disposables and Nonwovens Association) empfohlenen Testmethode Nr. 420.2-02 "Particle size distribution" bestimmt. Die vereinigte Mittelkomfraktion enthielt 0,14 Gew.-% Partikel mit einer Korngröße von über 850 µm und 24,7 Gew.-% Partikel mit einer Korngröße von über 600 bis 850 µm.

Zusätzlich wurde die Partikelgrößenverteilung der vereinigten Überkornfraktion bestimmt. Hierzu wurden zu unterschiedlichen Zeiten zwei Proben genommen. Das Ergebnis ist in der Tabelle zusammengefasst.

### Beispiel:

Es wurde verfahren wie im Vergleichsbeispiel.

Die abgekühlten Polymerpartikel wurden in einer Taumelsiebmaschine (Allgaier Werke GmbH, Uhingen, DE) mit drei Siebdecks kontinuierlich gesiebt. Die Siebe hatten einen Durchmesser von jeweils 260 cm und wiesen, von unten nach oben, eine Maschenweite von 150 µm, 500 µm, 1.000 µm und 3.000 µm auf. Die Siebfraktionen von den Sieben mit den Maschenweiten von 150 µm und 500 µm wurden zur Mittelkornfraktion vereinigt. Die Siebfraktionen von den Sieben mit den Maschenweiten von 1.000 µm und 3.000 µm wurden vereinigt und als Überkorn rückgeführt. Insgesamt fielen 0,2 bis 0,5 t/h Überkorn an.

Die Partikelgrößenverteilung der vereinigten Mittelkornfraktion wurde gemäß der von der EDANA (European Disposables and Nonwovens Association) empfohlenen Testmethode Nr. 420.2-02 "Particle size distribution" bestimmt. Die vereinigte Mittelkomfraktion enthielt 0,31 Gew.-% Partikel mit einer Korngröße von über 850 µm und 31,7 Gew.-% Partikel mit einer Korngröße von über 600 bis 850 µm.

Zusätzlich wurde die Partikelgrößenverteilung der vereinigten Überkornfraktion bestimmt. Hierzu wurden zu unterschiedlichen Zeiten zwei Proben genommen. Das Ergebnis ist in der Tabelle zusammengefasst.

**Tab.: Partikelgrößenverteilung des vereinigten Überkorns nach der Nachvernetzung**

| Korngröße [µm] | Vergleichsbeispiel | | Beispiel | |
|---|---|---|---|---|
| | Probe 1 | Probe 2 | Probe 1 | Probe 2 |
| >5.000 | 0,5 Gew.-% | 0,1 Gew.-% | 0,0 Gew.-% | 0,5 Gew.-% |
| >4.000-5.000 | 0,6 Gew.-% | 0,1 Gew.-% | 0,0 Gew.-% | 0,6 Gew.-% |
| >3.150-4.000 | 0,2 Gew.-% | 0,1 Gew.-% | 0,0 Gew.-% | 0,9 Gew.-% |
| >2.000-3.150 | 0,5 Gew.-% | 0,2 Gew.-% | 0,0 Gew.-% | 4,1 Gew.-% |
| >1.000-2.000 | 1,3 Gew.-% | 0,7 Gew.-% | 6,8 Gew.-% | 19,4 Gew.-% |
| >850-1.000 | 18,9 Gew.-% | 10,1 Gew.-% | 69,8 Gew.-% | 52,4 Gew.-% |
| ≤850 | 78,0 Gew.-% | 88,7 Gew.-% | 23,4 Gew.-% | 22,1 Gew.-% |
| >800-850 | 32,5 Gew.-% | 28,7 Gew.-% | 22,8 Gew.-% | 20,6 Gew.-% |
| >710-800 | 39,5 Gew.-% | 43,4 Gew.-% | 0,5 Gew.-% | 0,5 Gew.-% |
| >600-710 | 4,5 Gew.-% | 15,0 Gew.-% | 0,1 Gew.-% | 0,6 Gew.-% |
| >300-600 | 1,1 Gew.-% | 1,4 Gew.-% | 0,0 Gew.-% | 0,2 Gew.-% |
| >150-300 | 0,2 Gew.-% | 0,1 Gew.-% | 0,0 Gew.-% | 0,2 Gew.-% |
| ≤300 | 0,2 Gew.-% | 0,1 Gew.-% | 0,0 Gew.-% | 0,0 Gew.-% |

Die Tabelle zeigt, dass das im erfindungsgemäßen Verfahren abgetrennte Überkorn erheblich weniger Fehlaustrag enthält.

## Patentansprüche

1. Verfahren zur Herstellung wasserabsorbierender Polymerpartikel, umfassend
i) Klassieren der wasserabsorbierenden Polymerpartikel, wobei das Überkorn mittels mindestens eines Siebes abgetrennt wird und das Sieb oder bei mehreren Sieben das Sieb mit der niedrigsten Maschenweite die Maschenweite m₁ aufweist,
ii) Nachvernetzen der klassierten Polymerpartikel und
iii) Klassieren der nachvernetzten Polymerpartikel, wobei das Überkorn mittels mindestens eines Siebes abgetrennt wird und das Sieb oder bei mehreren Sieben das Sieb mit der niedrigsten Maschenweite die Maschenweite m₂ aufweist,
**dadurch gekennzeichnet, dass** m₂ größer m₁ ist, der stündliche Durchsatz an wasserabsorbierenden Polymerpartikeln beim Klassieren mindestens 100 kg pro m² Siebfläche beträgt, die Maschenweite m₁ mindestens 850 µm beträgt und die Maschenweite m₂ mindestens 150 µm größer ist als die Maschenweite m₁.

2. Verfahren gemäß Anspruch 1, **dadurch gekennzeichnet, dass** das Überkorn in Schritt i) mittels mindestens zweier Siebe unterschiedlicher Maschenweiten abgetrennt wird.

3. Verfahren gemäß Anspruch 1 oder 2, **dadurch gekennzeichnet, dass** das Überkorn in Schritt iii) mittels mindestens zweier Siebe unterschiedlicher Maschenweiten abgetrennt wird.

4. Verfahren gemäß einem der Ansprüche 1 bis 3, **dadurch gekennzeichnet, dass** das Überkorn in Schritt i) mittels mindestens zweier Siebe unterschiedlicher Maschenweiten abgetrennt wird und mindestens ein Sieb eine Maschenweite aufweist, die um mindestens 50 µm größer ist als die Maschenweite m₁.

5. Verfahren gemäß einem der Ansprüche 1 bis 4, **dadurch gekennzeichnet, dass** das Überkorn in Schritt iii) mittels mindestens zweier Siebe unterschiedlicher Maschenweiten abgetrennt wird und mindestens ein Sieb eine Maschenweite aufweist, die um mindestens 500 µm größer ist als die Maschenweite m₂.

6. Verfahren gemäß einem der Ansprüche 1 bis 5, **dadurch gekennzeichnet, dass** die wasserabsorbierenden Polymerpartikel während des Klassierens eine Temperatur von mindestens 40 °C aufweisen.

7. Verfahren gemäß einem der Ansprüche 1 bis 6, **dadurch gekennzeichnet, dass** bei vermindertem Druck klassiert wird.

8. Verfahren gemäß einem der Ansprüche 1 bis 7, **dadurch gekennzeichnet, dass** der stündliche Durchsatz an wasserabsorbierenden Polymerpartikeln beim Klassieren mindestens 300 kg pro m² Siebfläche beträgt.

9. Verfahren gemäß einem der Ansprüche 1 bis 8, **dadurch gekennzeichnet, dass** die wasserabsorbierenden Polymerpartikel während des Klassierens von einem Gasstrom überströmt werden.

10. Verfahren gemäß Anspruch 9, **dadurch gekennzeichnet, dass** der Gasstrom eine Temperatur von 40 bis 120 °C aufweist.

11. Verfahren gemäß Anspruch 9 oder 10, **dadurch gekennzeichnet, dass** der Gasstrom einen Wasserdampfgehalt von weniger als 5 g/kg aufweist.

12. Verfahren gemäß einem der Ansprüche 1 bis 11, **dadurch gekennzeichnet, dass** die wasserabsorbierenden Polymerpartikel vor Schritt ii) eine Zentrifugenretentionskapazität von mindestens 15 g/g aufweisen.

## Claims

1. A process for preparing water-absorbing polymer beads, comprising
i) classification of the water-absorbing polymer beads, the oversize being removed by means of at least one screen and the screen, or, in the case of several screens, the screen with the smallest mesh size, having the mesh size m₁,
ii) postcrosslinking of the classified polymer beads and
iii) classification of the postcrosslinked polymer beads, the oversize being removed by means of at least one screen and the screen, or, in the case of several screens, the screen with the smallest mesh size, having the mesh size m₂,
wherein m₂ is greater than m₁ and the throughput per hour of water-absorbing polymer beads in the course of classification is at least 100 kg per m² of screen area, the mesh size m₁ being at least 850 µm and the mesh size m₂ being at least 150 µm greater than the mesh size m₁.

2. The process according to claim 1, wherein the oversize is removed in step i) by means of at least two screens of different mesh sizes.

3. The process according to claim 1 or 2, wherein the oversize is removed in step iii) by means of at least two screens of different mesh sizes.

4. The process according to any of claims 1 to 3, wherein the oversize is removed in step i) by means of at least two screens of different mesh sizes and at least one screen has a mesh size which is at least 50 µm greater than the mesh size m₁.

5. The process according to any of claims 1 to 4, wherein the oversize is removed in step iii) by means of at least two screens of different mesh sizes and at least one screen has a mesh size which is at least 500 µm greater than the mesh size m₂.

6. The process according to any of claims 1 to 5, wherein the water-absorbing polymer beads, during the classification, have a temperature of at least 40°C.

7. The process according to any of claims 1 to 6, wherein classification is effected under reduced pressure.

8. The process according to any of claims 1 to 7, wherein the throughput per hour of water-absorbing polymer beads in the course of classification is at least 300 kg per m² of screen area.

9. The process according to any of claims 1 to 8, wherein the water-absorbing polymer beads are flowed over by a gas stream during the classification.

10. The process according to claim 9, wherein the gas stream has a temperature of from 40 to 120°C.

11. The process according to claim 9 or 10, wherein the gas stream has a steam content of less than 5 g/kg.

12. The process according to any of claims 1 to 11, wherein the water-absorbing polymer beads, before step ii), have a centrifuge retention capacity of at least 15 g/g.

## Revendications

1. Procédé pour la fabrication de particules polymères absorbant l'eau, comprenant
i) la classification des particules polymères absorbant l'eau, le refus supérieur étant séparé au moyen d'au moins un tamis et le tamis ou, dans le cas de plusieurs tamis, le tamis présentant la largeur de maille la plus petite présentant la largeur de maille m₁,
ii) la post-réticulation des particules polymères classifiées et
iii) la classification des particules polymères post-réticulées, le refus supérieur étant séparé au moyen d'au moins un tamis et le tamis ou, dans le cas de plusieurs tamis, le tamis présentant la largeur de maille la plus petite présentant la largeur de maille m₂,
**caractérisé en ce que** m₂ est supérieure à m₁, le débit horaire de particules polymères absorbant l'eau lors de la classification vaut au moins 100 kg par m² de surface de tamisage, la largeur de maille m₁ vaut au moins 850 µm et la largeur de maille m₂ est supérieure d'au moins 150 µm à la largeur de maille m₁.

2. Procédé selon la revendication 1, **caractérisé en ce que** le refus supérieur dans l'étape i) est séparé au moyen d'au moins deux tamis de largeurs de maille différentes.

3. Procédé selon la revendication 1 ou 2, **caractérisé en ce que** le refus supérieur dans l'étape iii) est séparé au moyen d'au moins deux tamis de largeurs de maille différentes.

4. Procédé selon l'une quelconque des revendications 1 à 3, **caractérisé en ce que** le refus supérieur dans l'étape i) est séparé au moyen d'au moins deux tamis de largeurs de maille différentes et au moins un tamis présente une largeur de maille qui est supérieure d'au moins 50 µm à la largeur de maille m₁.

5. Procédé selon l'une quelconque des revendications 1 à 4, **caractérisé en ce que** le refus supérieur dans l'étape iii) est séparé au moyen d'au moins deux tamis de largeurs de maille différentes et au moins un tamis présente une largeur de maille qui est supérieure d'au moins 500 µm à la largeur de maille m₂.

6. Procédé selon l'une quelconque des revendications 1 à 5, **caractérisé en ce que** les particules polymères absorbant l'eau présentent une température d'au moins 40 °C pendant la classification.

7. Procédé selon l'une quelconque des revendications 1 à 6, **caractérisé en ce que** la classification a lieu à pression réduite.

8. Procédé selon l'une quelconque des revendications 1 à 7, **caractérisé en ce que** le débit horaire de particules polymères absorbant l'eau lors de la classification vaut au moins 300 kg par m² de surface de tamisage.

9. Procédé selon l'une quelconque des revendications 1 à 8, **caractérisé en ce que** les particules polymères absorbant l'eau sont submergées par un flux gazeux pendant la classification.

10. Procédé selon la revendication 9, **caractérisé en ce que** le flux gazeux présente une température de 40 à 120 °C.

11. Procédé selon la revendication 9 ou 10, **caractérisé en ce que** le flux gazeux présente une teneur en vapeur d'eau inférieure à 5 g/kg.

12. Procédé selon l'une quelconque des revendications 1 à 11, **caractérisé en ce que** les particules polymères absorbant l'eau présentent, avant l'étape ii), une capacité de rétention dans une centrifugeuse d'au moins 15 g/g.
